# EUROPEAN PATENT APPLICATION

(11) **EP 1 671 693 A2**
(43) Date of publication of application: **21.06.2006**
(21) Application number: 05026171.8
(22) Date of filing: 01.12.2005
(51) Int. Cl.: B01D 29/01, B01D 29/11

(54) **Filter and method of making said filter**

(30) Priority: 07.12.2004 US 633940 P
(71) Applicant: National Starch and Chemical Investment Holding Corporation, New Castle, Delaware 19720 (US)
(72) Inventor: Orloff, John E., Lawrenceville New Jersey 08648 (US); Lydzinsky, David W., Belle Mead New Jersey 08502 (US); Dolan, Peter, Princeton New Jersey 08540 (US)
(74) Representative: Held, Stephan

(57) **Abstract**

Aqueous foamed adhesives are used in the assembly of filters.

## Description

### FIELD OF THE INVENTION

The invention relates to aqueous foamed adhesives and to articles manufactured with the adhesive. The adhesives are particularly well-suited for use in the manufacture of filters, more specifically for the lamination of frames to filter media.

### BACKGROUND OF THE INVENTION

Liquid solvent-based adhesives, aqueous liquid adhesives and hot melt adhesives are conventionally used to bond one substrate to a second substrate. Each of these adhesives, however, have a number of disadvantages associated with their use. Solvent-based adhesives pose environmental and health hazards and are difficult to handle, as are hot melt adhesives. Aqueous liquid adhesives provide for environmentally friendly adhesives over alternative solvent base adhesives, and increased safety and handling versus hot melt adhesives, but require significant drying times.

Water-based adhesives are commonly used to manufacture articles made of paper. In the manufacturing process, a water-based adhesive is generally applied to a first substrate and then mated to another similar or dissimilar second substrate to bind the first substrate to the second substrate. While water-based adhesives have been used in the manufacture such paper articles, water-based adhesives require significant drying times and the water contained within them often causes the substrates to warp, wrinkle, curl or bend.

### SUMMARY OF THE INVENTION

The invention is directed to the manufacture of articles, specifically articles comprising a paper or paperboard media held to a frame member by a water-based foamed adhesive.

In one embodiment the article is made of paper or paperboard. A preferred embodiment of the invention is a filter. Particularly useful articles of manufacture comprise framed filters (e.g., for HVAC units, and the like). Also encompassed are honeycomb structures (e.g., useful as a core material in the manufacture of hollow entry doors, garage doors, and the like).

Still another aspect of the invention is directed to a process for bonding a substrate to a similar or dissimilar substrate comprising applying to at least a first substrate a foamed aqueous adhesive composition, bringing a second substrate in contact with the composition applied to the first substrate, whereby the first and second substrates are bonded together, wherein the article is a framed filter. The filter medium may be flat or pleated, as is conventional in the art. The article may, if desired, be subjected to conditions (e.g., ambient air, heat and/or pressure) which will allow the composition to form a set bond. In a preferred embodiment, the first and second substrates are both paper or paperboard.

### DETAILED DESCRIPTION OF THE INVENTION

All documents cited herein are incorporated in their entireties by reference.

It has now been discovered that a foamed aqueous adhesive may be used for the manufacture certain paper based products, including the manufacture of filters for various end use applications. The foamed adhesive is advantageously used to bond or laminate the filter frame to the filter media.

While the type of adhesive that can be used in the practice of the invention is not particularly limiting or critical to the practice of the invention, preferred are adhesive formulations that comprise, as a major portion, a synthetic resin. Particularly suitable synthetic resins are polyvinyl acetate homopolymers, copolymers of polyvinyl acetate, and various mixtures thereof. Encompassed are mixtures of polyvinyl acetate and other polymer emulsions comprising vinyl acetate and other monomers, including but not limited to ethylene and acrylic monomers. Polyvinyl acetate may be prepared using a continuous or a batch process. Polyvinyl acetate emulsion mixtures wherein the polyvinyl acetates used are prepared by one method or by both methods may be used. Aqueous polyvinyl acetate adhesive that can be used in the practice of the invention are available from National Starch and Chemical Company, Bridgewater, NJ.

The adhesive may also contain a filler. The addition of a filler allows for foam generated to remain consistent and stable for several hours. Suitable fillers are those fillers known in the art as adhesives fillers and include polysaccharides, calcium carbonate, clay, mica, nut shell flours, silica, talc and wood flour.

Polysaccharides useful in the invention include starch, dextrin, cellulose, gums or combinations thereof. Particularly useful are the starches and dextrins including native, converted or derivatized. Such starches include those derived from any plant source including maize (corn), potato, wheat, rice, sago, tapioca, waxy maize, sorghum and high amylose starch such as high amylose corn, i.e. starch having at least 45% amylose content by weight. Starch flours may also be used. Also included are the conversion products derived from any of the former bases, such as, for example, dextrins prepared by hydrolytic action of acid and/or heat; fluidity or thin boiling starches prepared by enzyme conversion or mild acid hydrolysis; oxidized starches prepared by treatment with oxidants such as sodium hypochlorite; and derivatized or modified starches such as cationic, anionic, amphoteric, non-ionic, crosslinked and hydroxypropyl starches. Other useful polysaccharides are cellulose materials such as carboxymethylcellulose, hydroxypropyl cellulose and hydroxypropyl methylcellulose, and gums such as guar, xanthan, pectin and carrageenan may also be used in the practice of the invention. Modified starches include, but are not limited to, those modified with an alkyl succinic anhydride. Preferred are octenyl succinic anhydride (OSA) and dodecenyl succinic anhydride (DDSA) modified starches or dextrins.

In addition to fillers, other additives typical of adhesive compositions may be added to the foamable composition. Said additives include, but are not limited to, plasticizers, acids, waxes, synthetic resins, tackifiers, defoamers, preservatives, bases such as sodium hydroxide, dyes, pigments, UV indicators, and other additives commonly used in the art.

The adhesive may also contain a surface-active agent. Examples of surface-active agents include anionic, cationic, amphoteric, or nonionic surfactants, or mixtures thereof. Suitable anionic surfactants include, alkyl sulfonates, alkylaryl sulfonates, alkyl sulfates, sulfates of hydroxylalkanols, alkyl and alkylaryl disulfonates, sulfonated fatty acids, sulfates and phosphates of polyethoxylated alkanols and alkylphenols, and esters of sulfosuccinic acid. Suitable cationic surfactants include, alkyl quaternary ammonium salts, and alkyl quaternary phosphonium salts. Suitable non-ionic surfactants include the addition products of 5 to 50 moles of ethylene oxide adducted to straight-chain and branched-chain alkanols having 6 to 22 carbon atoms, alkylphenols, higher fatty acids, higher fatty acid amines, primary or secondary higher alkyl amines, and block copolymers of propylene oxide with ethylene oxide, and mixtures thereof. When used, the surface active agent will typically be added in amounts up to about 20% by weight, based on the foamable composition as a whole. More usually from amounts of from about 0.05 to about 20% by weight, and preferably at from 0.2 to 2% by weight.

Other additives typical of adhesive compositions may be added to the foamable composition of the invention. Said additives include, but are not limited to, humectants, flavorants, crosslinkers, plasticizers, acids, waxes, synthetic resins, tackifiers, defoamers, preservatives, bases such as sodium hydroxide, dyes, pigments, UV indicators, and other additives commonly used in the art.

Examples of humectants include those conventionally used in aqueous adhesives such as sugars (sucrose, fructose), urea, glycols, glycerine and salts such as sodium chloride, sodium nitrate and calcium chloride. The humectant will generally be used in amounts of from about 1.0 to about 20.0%.

Typical preservatives for use herein include those conventionally used in aqueous adhesives such as benzoates, amides and fluorides such as sodium fluoride. Also included are the hydroxybenzoic acid esters such as p-hydroxybenzoic acid methyl ester or p-hydroxybenzoic butyl ester. Commercially available preservatives which may be used in the practice of the invention include KATHON LXE sold by Rohm & Haas Company and Nipacide OBS sold by Clariant. The preservative will generally be included in amounts of from 0.05% to about 0.2% by weight.

Adhesives of the invention may be prepared using techniques known in the art. The foamable adhesive composition is foamed by the addition of energy, by means known in the art such as, but not limited to, by mechanical and/or chemical means. Air or other gases are added to the foamable adhesive composition along with the addition of said energy to produce a stable, consistent foamed adhesive. Preferably air is used to produce the foamed adhesive. The adhesive foam may be produced by mechanical means such as mechanical stirring or agitation, introduction of gases or by chemical means.

The amount of air dispersed in the adhesive can vary depending on the particular formulation, but will generally be from about 5% (by volume) up to about 75% (by volume) or greater, more typically from about 10 up to about 50% (by volume), even more typically from about 20 up to about 35% (by volume).

The adhesive may be applied by any method known in the art. The adhesive product can be applied to a substrate by a variety of methods including coating or spraying in an amount sufficient to cause the article to adhere to another substrate. The foamed adhesive formulations of the invention may be applied in a continuous or discontinuous, e.g., as evenly spaced beads or dots, manner depending on surface area and coating weight desired. Particular coating patterns and thickness may be chosen to optimize substrate/adhesive contact. The adhesive may be applied to the substrate by any method known in the art, and include, without limitation slot-coating, swirl spraying, extrusion, contact extrusion, atomized spraying, smooth roll, grooved roll, stencil, gravure (pattern wheel transfer), screen printing. Roller and stencil applicators are particularly preferred for use in applying the adhesive a paper substrate. Typically the substrate material is coated with from about 1 to about 10 wet mils of foamed adhesive, more typically from about 3 to about 6 mils of foamed adhesive.

The invention provides a process for bonding a substrate to a similar or dissimilar substrate comprising applying to at least a first substrate a foamed aqueous adhesive composition, bringing a second substrate in contact with the composition applied to the first substrate, whereby the first and second substrates are bonded together. In one embodiment the adhesive applied to one substrate is contacted to the adhesive applied to a second substrate to bond the first substrate to the second substrate. It will be appreciated that the first and second substrates may be different regions of the same substrate. The foamed adhesives are well suited for use in packaging, converting, bookbinding, bag ending and in the nonwovens markets, and find particular use as case, carton, and tray forming, and as sealing adhesives, and have now been found to be ideally suited for use for filter assembly or construction applications.

Various filter medias include paper, glass fiber, PVC and other synthetic medias, as well as wire mesh. Various framing substrates include virgin and recycled kraft, high and low-density kraft, chipboard and various types of treated and coated kraft and chipboard. Composite materials may also be used. These composite materials may include chipboard laminated to an aluminum foil which is further laminated to film materials such as polyethylene, mylar, polypropylene, polyvinylidene chloride, ethylene vinyl acetate and various other types of films. The aforementioned substrates by no means represent an exhaustive list, as a tremendous variety of substrates, especially composite materials, find utility in the manufacture of filters.

The adhesives are useful in the manufacture of all types of filters. Examples include but are not limited to HVAC (Heating Ventilation Air Conditioning) filters, filters used for air cleaning or purifying, such as HEPA (High Efficiency Particulate Air) filters and vacuum filters. The paper used in such filters may be treated to retain impurities in the air by physical or chemical means.

The filters (also referred to herein as filter assembly) prepared in accordance with the invention will typically comprise a frame and a filter media. In one embodiment the filter media comprise pleated sections arranged in a row in "V" shapes. In another embodiment the filter media may be flat. Typical filter media include paper, glass fiber, PVC and other synthetic medias, as well as wire mesh. The filter assembly will generally comprise a frame having two opposed end walls and two opposed side walls arranged in a rectangular configuration, the end walls and side walls including edges that define an upstream face and a downstream face. The filter media is bonded to the filter frame using a foamed aqueous adhesive. The filter assembly may include filter media alignment members disposed within the frame to assist in holding the filter media sections in alignment within the frame.

Other articles include honeycomb or reticulated structures, and the like. Typically, the honeycomb or reticulated structure, when used as the core material, e.g., in hollow entry doors or garage doors, is defined by a plurality of parallel strips of sheet material, each strip being formed into a sinuous path and bonded to immediately adjacent strips at its outwardly bowed extremities, and is formed of paper, typically Kraft paper. The paper can be untreated or impregnated with a suitable resin for increased stiffness.

Preferred foamed adhesives comprise at least one resin emulsion, and will typically comprise least one filler as well as other additives. Typically, the foamed adhesive comprises more than about 30%, more typically from about 50% by weight to about 100%, more preferably 55% by weight to about 85% by weight of the resin emulsion, and from 0% by weight to about 50% by weight, more typically from about 5% to about 20% % by weight of filler and/or other conventional additives. Foamed adhesives comprising a blend of two or more polyvinyl acetate emulsions are contemplated.

The foamable adhesive composition of the invention is foamed by the addition of energy, by means known in the art such as, but not limited to, by mechanical and/or chemical means. Air or other gases are added to the foamable adhesive composition along with the addition of said energy to produce a stable, consistent foamed adhesive.
Preferably air is used to produce the foamed adhesive. The adhesive foam may be produced by mechanical means such as mechanical stirring or agitation, introduction of gases or by chemical means. The amount of air dispersed in the adhesive can vary depending on the particular formulation, but will generally be from about 10% (by volume) up to about 50% (by volume) or greater.

The invention is further illustrated by the following non-limiting example.

### EXAMPLE

An adhesive composition was prepared using 29.8% of a polyvinyl acetate prepared using batch polymerization process, 54.7% of a polyvinyl acetate prepared using a continuous polymerization process, 9.9% corn starch, 5.4% of a plastizer and 0.1% of a preservative. This adhesive having both prior to foaming and following foaming to 30% using a Hansa foaming unit, was used to bond a pleated paper filter media to a cardboard frame member. The bonds were allowed to cure for one week before testing. Comparable adhesion was seen with both the foamed and the unfoamed adhesive.

## Claims

1. A paper filter comprising a frame and filter media, wherein the filter media is secured to the frame using a foamed aqueous adhesive.

2. The filter of claim 1 wherein the foamed adhesive comprises polyvinyl acetate.

3. The filter of claim 1 which is a pleated filter.

4. The filter of claim 1 which is a HVAC or HEPA filter.

5. A method of making a filter assembly comprising a frame and a filter media comprising securing the filter media to the frame using a foamed aqueous adhesive.

6. The method of claim 5 wherein the foamed adhesive comprises polyvinyl acetate.
